# EUROPÄISCHE PATENTANMELDUNG

(11) **EP 0 845 609 A1**
(43) Veröffentlichungstag der Anmeldung: **03.06.1998**
(21) Anmeldenummer: 96810826.6
(22) Anmeldetag: 26.11.1996
(51) Int. Cl.: F16B 43/02, F16B 5/02

(54) **Nivellierschraube und Befestigungsvorrichtung mit einer Nivellierschraube**

(71) Anmelder: Beracon AG, 4614 Hägendorf (CH)
(72) Erfinder: Mäder, Gerold, 4616 Kappel (CH)
(74) Vertreter: BOVARD AG - Patentanwälte

(57) **Zusammenfassung**

Die Befestigungsvorrichtung (1) zur Befestigung eines Montageteiles (2) umfasst eine Nivellierschraube (3), zwei Unterlagsscheiben (4, 5) sowie eine Mutter (6). Die Nivellierschraube weist in ihrem vorderen Teil (7) ein metrisches Gewinde (8) zur Aufnahme der Mutter (6) auf. Im hinteren Teil (9) weist die Nivellierschraube (3) ein Holzschraubengewinde (10) auf. Zwischen den beiden Gewinden ist ein Kragen (12) angeordnet. Die Nivellierschraube (3) weist am Ende ihres vorderen Teils (7) ein Sechskantloch zur Verstellung der montierten Nivellierschraube, d.h., zur Nivellierung des Montageteils (2) auf. Mit der Befestigungsvorrichtung (1) kann das Montageelement in axialer Richtung nivelliert werden, wobei auch axiale Bohrlochabweichungen ausgeglichen werden können.

## Beschreibung

Die vorliegende Erfindung betrifft eine Nivellierschraube, insbesondere zur Befestigung eines Montageteiles, mit zwei sich von den beiden Endbereichen der Nivellierschraube gegeneinander erstreckenden Gewinden, sowie eine Befestigungsvorrichtung mit einer Nivellierschraube.

Bisher mussten beim Nivellieren eines Montageelementes bei Verwendung von herkömmlichen Schrauben, Unterlagsplättchen oder dgl. verwendet werden. Diese Art der Nivellierung ist erstens aufwendig und zweitens stören die Plättchen den ästhetischen Eindruck.

Es ist deshalb die Aufgabe der vorliegenden Erfindung, eine Nivellierschraube sowie eine Befestigungsvorrichtung mit einer Nivellierschraube zu schaffen, welche die vorerwähnten Nachteile des Standes der Technik nicht aufweisen. Dies wird erfindungsgemäss bei einer Nivellierschraube dadurch erzielt, dass zwischen den beiden Gewinden ein Kragen angeordnet ist. Im weiteren ist es eine Aufgabe der vorliegenden Erfindung, eine Nivellierschraube und eine Befestigungsvorrichtung mit einer Nivellierschraube zu schaffen, mit welchen auch axiale Bohrlochabweichungen ausgeglichen werden können. Bei der Nivellierschraube wird dies erfindungsgemäss dadurch erzielt, dass der Kragen als Kugelschicht ausgebildet ist. Bei der Befestigungsvorrichtung wird dies dadurch erzielt, dass die mindestens eine Unterlagsscheibe auf der einen Seite eine abgerundete Innenfläche und die Mutter einen abgerundeten Ansatz aufweist.

Im folgenden werden anhand der beiliegenden Zeichnung Ausführungsbeispiele der Erfindung sowie deren Verwendung näher beschrieben. Es zeigen
Fig. 1 eine Ansicht, teilweise geschnitten, einer Befestigungsvorrichtung mit einer Nivellierschraube,
Fig. 2, 3 und 4 die Befestigungsvorrichtung mit der Nivellierschraube in drei verschiedenen Lagen bezüglich der Wand,
Fig. 5 ein an der Wand montierter Montageteil mit zwei Nivellierschrauben, wobei die eine in ein schräges Loch eingeschraubt ist,
Fig. 6 den vorderen Teil einer Nivellierschraube mit auf dem Kragen beweglich aufgepresster Unterlagsscheibe für die Montage an der Decke oder an einem schwer zugänglichen Ort,
Fig. 7 den hinteren Teil einer Nivellierschraube, dessen hinteres metrisches Gewinde einen Kunststoffstopp aufweist,
Fig. 8 den vorderen Teil einer Nivellierschraube mit schmälerem Kragen.

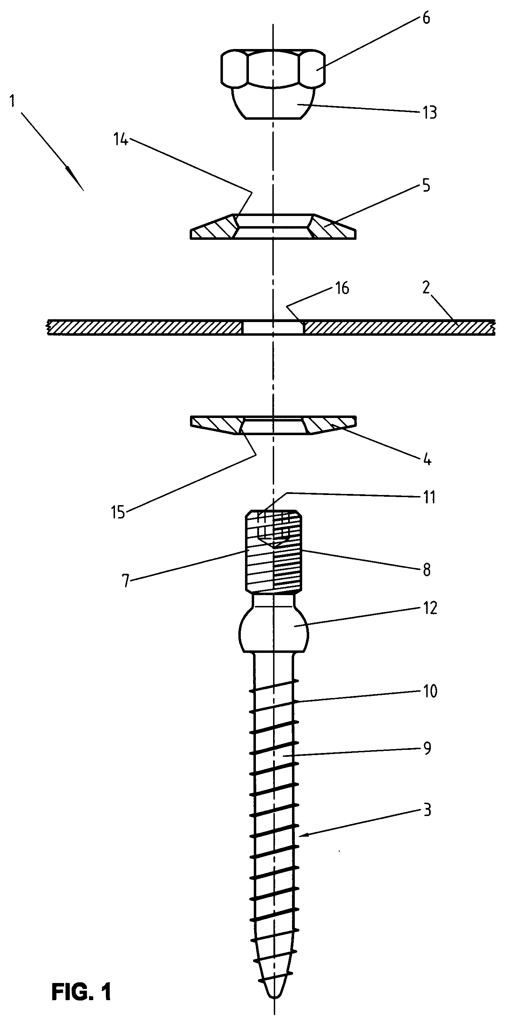

Fig. 1 zeigt die Befestigungsvorrichtung 1 zur Befestigung eines Montageteils 2, im vorliegenden Fall eine Metallplatte, an einer nicht dargestellten Wand aus Stein, Beton, Holz, etc. Die Befestigungsvorrichtung 1 umfasst eine Nivellierschraube 3, eine hintere und eine vordere Unterlagsscheibe 4 und 5 sowie eine Mutter 6. Die Nivellierschraube 3 weist in ihrem vorderen Teil 7 ein metrisches Gewinde 8 und im hinteren Teil 9 ein Holzschraubengewinde 10 auf. Zuvorderst im vorderen Teil 7 ist ein Innensechskant 11 angeordnet. Zwischen den Gewinden ist ein Kragen 12 vorgesehen, der die Form einer Kugelschicht aufweist. Die Mutter 6 ist an ihrem gegen die Unterlagsscheibe 5 zugekehrten Ende mit einem abgerundeten Teil 13 versehen, der die Form einer Kugelschicht aufweist, wobei sich durch die Mutter 6 ein aus dieser Figur nicht ersichtliches Innengewinde erstreckt. Die Unterlagsscheibe 5 weist auf der der Mutter 6 zugekehrten Seite eine abgerundete Innenfläche 14 auf, die der Aussenfläche einer Kugelschicht entspricht. Die Unterlagsscheibe 4 weist auf der der Nivellierschraube 3 zugekehrten Seite eine abgerundete Innenfläche 15 auf, die der Aussenfläche einer Kugelschicht entspricht. Der abgerundete Teil 13 der Mutter 6 kommt bei zusammengesetzter Befestigungsvorrichtung auf die Innenfläche 14 der Unterlagsscheibe 5 und der Kragen 12 auf die Innenfläche 15 der Unterlagsscheibe 4 zu liegen. Der Montageteil 2 weist eine Öffnung 16 für den Durchtritt des vorderen Teils der Nivellierschraube 3 auf.

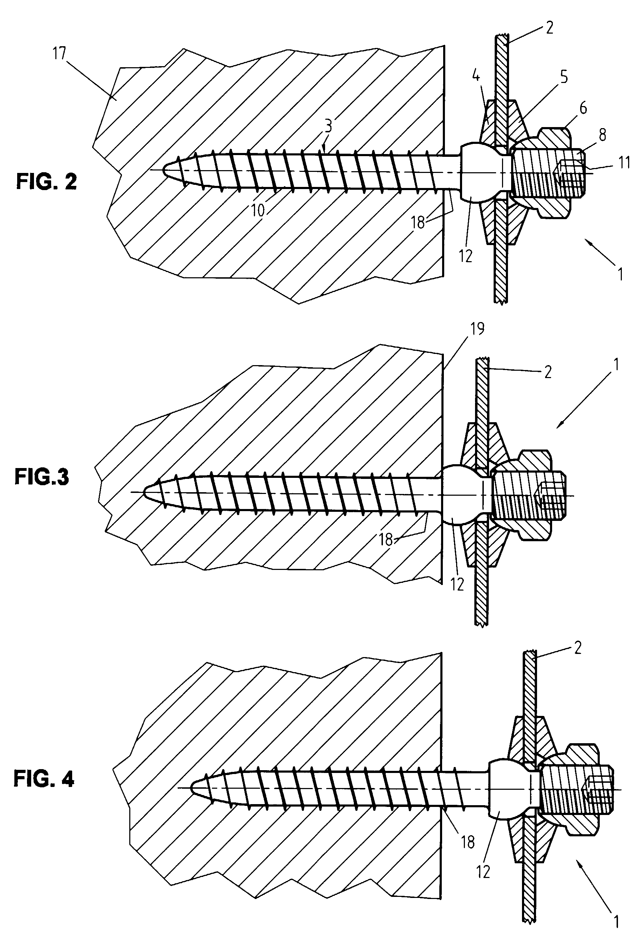

Fig. 2 zeigt eine nicht ganz in die Wand 17 eingeschraubte Nivellierschraube 3. Zur Befestigung des Montageteils 2 werden die Bohrlöcher 18 angezeichnet und anschliessend gebohrt. Es werden in dieser Figur nicht dargestellte Kunststoff- oder Metalldübel gesetzt oder die Schraube mit dem entsprechenden Gewinde direkt in die Wand geschraubt. Die Nivellierschrauben 3 werden auf die gewünschte Position eingedreht und Unterlagsscheiben 4 auf die Kragen 12 gelegt. Der Montageteil 2 wird auf die vorgesetzten Nivellierschrauben 3 aufgesetzt, worauf auf den Montageteil 2 die Unterlagsscheiben 5 im Bereich der metrischen Gewinde 8 aufgesetzt werden. Mit den Muttern 6 wird die Befestigungsvorrichtung gesichert. Die richtige Dimensionierung der Unterlagsscheiben 4, 5 verhindert beim Anziehen der Mutter 6, dass sich die Schraube 3 im Bohrloch oder Dübel mitdreht. Zum Nivellieren wird die Mutter 6 auf dem metrischen Gewinde 8 der Nivellierschraube leicht gelöst. Alsdann wird der Steckschlüssel in den Innensechskant 11 der Nivellierschraube gesteckt und die Nivellierschraube 3 in der gewünschten Richtung korrigiert, bis die Montageposition erreicht ist. Darauf wird die Mutter 6 festgezogen. Dank dem Kragen 12 kann das Montageelement 2 nivelliert werden. Der zu nivellierende Montageteil 2 liegt mittels der Unterlagsscheibe 4 auf dem Kragen 12 auf. Nivelliert werden muss das Montageelement, wenn die Wandoberfläche 19 beispielsweise nicht eben ist oder eine Distanzmontage gewünscht wird. Mit der Mutter 6 wird die Unterlagsscheibe 5 auf den Montageteil 2 gedrückt. Derselbe liegt auf der unteren Unterlagsscheibe 4 auf, welche auf dem Kragen 12 aufliegt. Zum Distanzieren wird die Mutter 6 auf dem metrischen Gewinde 8 auf der Nivellierschraube leicht gelöst. Mit dem Steckschlüssel, der in den Innensechskant 11 gesteckt wird, wird die Nivellierschraube 3 vor- oder zurückgedreht, bis der gewünschte Wandabstand erreicht ist. Darauf wird die Mutter festgezogen. Es ist möglich, nur mit dem Steckschlüssel zu arbeiten, indem man zum Anziehen der Mutter die Innensechskantschraube etwas entgegendreht.

In der Fig. 3 ist die Nivellierschraube 3 in einer Position gezeigt, in welcher der Kragen 12 ganz an der Wandoberfläche 19 anliegt.

In Fig. 4 ist die Nivellierschraube 3 in einer Position gezeigt, in welcher sie weiter von der Wandoberfläche 19 entfernt ist als in der Position gemäss Fig. 2.

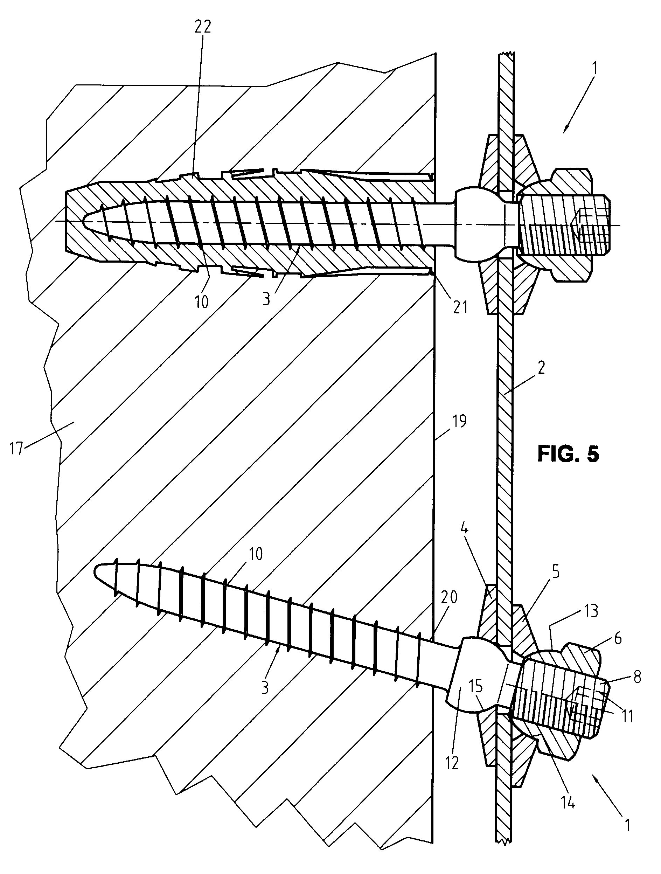

Aus Fig. 5 ist ersichtlich, wie durch die Befestigungsvorrichtung 1 Bohrlöcher 20, welche nicht senkrecht zur Wandoberfläche 19 gebohrt sind, d.h., axiale Bohrlochabweichungen ausgeglichen werden können. Die meisten Bohrlöcher können aus verschiedenen Gründen nicht immer in der gewünschten Längsachse gebohrt werden. Mit der Befestigungsvorrichtung 1 kann aber gleichwohl eine optimale Schraubenverbindung mit dem Montageteil gewährleistet werden. Mittels der hinteren Unterlagsscheibe 4 und der vorderen Unterlagsscheibe 5, welche eine abgerundete Innenfläche 15 und 14 aufweisen, und dem abgerundeten Teil 13 der Mutter 6, kann die Schräglage der Nivellierschraube 3 ausgeglichen und die optimale Schraubenverbindung gewährleistet werden. Die Unterlagsscheiben der schräg zur Wandoberfläche 19 eingeschraubten Nivellierschraube 3 sind auf dem Montageteil 2 gegeneinander verschoben. Der abgerundete Teil 13 der Mutter 6 liegt auf der abgerundeten Fläche 14 der vorderen Unterlagsscheibe 5 auf, und der Kragen 12 auf der abgerundeten Fläche 15 der hinteren Unterlagsscheibe 4, wie im Falle einer senkrecht zur Wandoberfläche 19 eingeschraubten Nivellierschraube 3. Oben in Fig. 5 ist ein Bohrloch 21 dargestellt, welches senkrecht zur Wandoberfläche 19 gebohrt ist und in welches ein Kunststoffdübel 22 eingesetzt ist. Der Kragen könnte zum Nivellieren auch beispielsweise scheibenförmig ausgebildet sein, aber dann wäre kein Ausgleich einer schrägen Bohrlochlängsachse möglich.

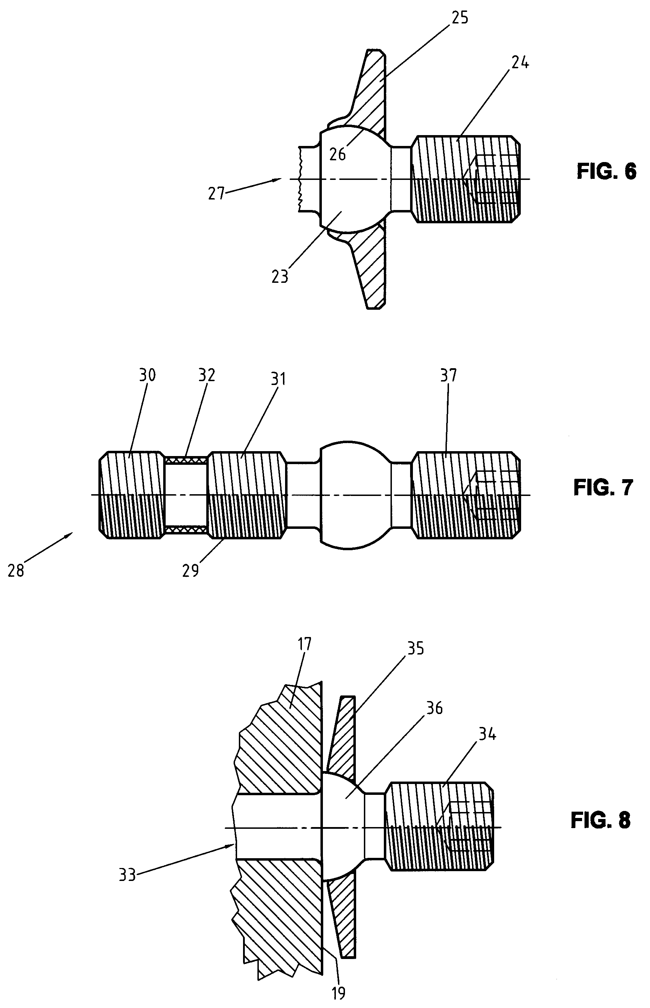

In Fig. 6 ist ein Teil eines anderen Ausführungsbeispieles einer Nivellierschraube, teilweise im Schnitt, dargestellt. Es ist das mit dem Kragen 23 verbundene metrische Gewinde 24 sowie die auf den Kragen aufgepresste Unterlagsscheibe 25 abgebildet. Die abgerundete Bohrung 26 in der Unterlagsscheibe 25 ist derart ausgebildet, dass die Unterlagsscheibe beweglich auf dem Kragen gehalten ist. Diese Ausführungsform einer Nivellierschraube 27 eignet sich für die Überkopfmontage von Montageteilen. Der Montageteil ist in dieser Figur ebenfalls nicht dargestellt.

Fig. 7 zeigt ein weiteres Ausführungsbeispiel eines Teils einer Nivellierschraube 28. Der hintere Teil 29 weist zwei voneinander in Abstand angeordnete metrische Gewinde 30 und 31 auf. Dazwischen ist ein Kunststoffring 32, beispielsweise aus Nylon, angeordnet, der als Stopp wirkt und zugleich die minimale Einschraublänge kennzeichnet. Dieser Kunststoffstopp verhindert, wenn die metrischen Gewinde 30, 31 in einen entsprechenden Dübel geschraubt werden, ein unerwünschtes Verstellen der Nivellierschraube 28 beim Aufsetzen der in dieser Fig. 7 nicht dargestellten Mutter. Der vordere Teil weist wie bei den anderen Ausführungsformen ein metrisches Gewinde 37 auf. Bei einer nicht dargestellten Ausführungsform ist anstelle der beiden Gewinde 30, 31 ein durchgehendes Gewinde vorhanden, das in einem gewissen Bereich, der beispielsweise etwa dem Kunststoffring 32 entspricht, durch Kerben oder Stauchen leicht deformiert ist.

In Fig. 8 ist eine weitere Ausführungsform einer Nivellierschraube 33 dargestellt. Der hintere Teil 34 mit dem metrischen Gewinde sowie die Unterlagsscheibe 35 sind gleich ausgebildet wie bei den Ausführungsbeispielen gemäss den Fig. 1 bis 5. Der Kragen 36 ist ebenfalls abgerundet abgebildet, wobei er jedoch einer dünneren Kugelschicht entspricht als bei den Ausführungsformen gemäss den Fig. 1 bis 7. Dies hat den Vorteil, dass der minimale Abstand des in dieser Figur nicht dargestellten Montageteils von der Oberfläche 19 der Wand 17 kleiner wird als dies bei der Ausführungsform gemäss Fig. 3 der Fall ist.

Die erfindungsgemässe Nivellierschraube sowie die Befestigungsvorrichtung mit der Nivellierschraube finden vorwiegend im Metallbau, bei der Konsolenmontage, beim Fassadenbau, beim Lüftungsbau, im Sanitär- und Heizungsbereich und bei der Kanalmontage Anwendung.

## Patentansprüche

1. Nivellierschraube (3), insbesondere zur Befestigung eines Montageteiles (2), mit zwei sich von den beiden Endbereichen der Nivellierschraube gegeneinander erstreckenden Gewinden (8, 10), dadurch gekennzeichnet, dass zwischen den beiden Gewinden ein Kragen (12) angeordnet ist.

2. Nivellierschraube nach Patentanspruch 1, dadurch gekennzeichnet, dass das eine Gewinde (8) ein metrisches Gewinde ist.

3. Nivellierschraube nach Patentanspruch 1 oder 2, dadurch gekennzeichnet, dass das andere Gewinde (10) ein beliebiges Gewinde, beispielsweise ein Holzschraubengewinde, ein Spanplattengewinde, ein metrisches Gewinde oder ein Gewinde für die Direktmontage in Beton und Stein ist.

4. Nivellierschraube nach einem der vorangehenden Patentansprüche, dadurch gekennzeichnet, dass der Kragen als Kugelschicht (12) ausgebildet ist.

5. Nivellierschraube nach einem der vorangehenden Patentansprüche, dadurch gekennzeichnet, dass beide Gewinde als metrische Gewinde (30, 31, 37) ausgebildet sind und das eine Gewinde (30, 31) mit einem Stopp (32) versehen ist.

6. Nivellierschraube nach Patentanspruch 5, dadurch gekennzeichnet, dass der Stopp als Kunststoffring (32) ausgebildet ist.

7. Nivellierschraube nach Patentanspruch 5, dadurch gekennzeichnet, dass der Stopp als teilweise Deformation des Gewindes ausgebildet ist.

8. Befestigungsvorrichtung mit einer Nivellierschraube (3), insbesondere zur Befestigung eines Montageteils (2) nach einem der vorangehenden Patentansprüche, gekennzeichnet durch mindestens eine Unterlagsscheibe (4, 5) und eine Mutter (6) zur Befestigung des Montageteils (2).

9. Befestigungsvorrichtung nach Patentanspruch 8, dadurch gekennzeichnet, dass die Unterlagsscheibe (4, 5) auf der einen Seite eine abgerundete Innenfläche (14, 15) aufweist.

10. Befestigungsvorrichtung nach Patentanspruch 8 oder 9, dadurch gekennzeichnet, dass die Mutter (6) einen abgerundeten Ansatz (13) aufweist, durch den sich das Innengewinde der Mutter erstreckt.

11. Befestigungsvorrichtung nach einem der Patentansprüche 8 - 10, dadurch gekennzeichnet, dass zwei Unterlagsscheiben (4, 5) vorgesehen sind.
